# DEMANDE DE BREVET EUROPEEN

(11) **EP 1 069 531 A1**
(43) Date de publication de la demande: **17.01.2001**
(21) Numéro de dépôt: 00401939.4
(22) Date de dépôt: 06.07.2000
(51) Int. Cl.: G06T 11/00, G06F 17/50, G06T 17/20

(54) **Intégration de lignes de contrainte dans une triangulation de delaunay**

(30) Priorité: 12.07.1999 FR 9908994
(71) Demandeur: ALCATEL, 75008 Paris (FR)
(72) Inventeur: Rognant, Loic, 06100 Nice (FR)
(74) Mandataire: Lamoureux, Bernard

(57) **Abrégé**

L'invention concerne un procédé d'intégration d'un segment [A, Z] d'une ligne de contrainte dans une modélisation d'une forme par une triangulation satisfaisant le critère du cercle vide, comprenant les étapes de
- choix d'un point A du segment faisant partie de la triangulation;
- détermination de l'arête [A₁, A₂] la plus proche coupant le segment ;
- tracé du cercle circonscrit au triangle {A, A₁, A₂} formé du dit point et de la dite arête ;
- ajout à la triangulation du point d'intersection B entre le cercle circonscrit et le segment; ces étapes étant répétées jusqu'à intégration de l'ensemble du segment dans la triangulation.

L'invention permet d'intégrer un segment dans une triangulation, tout en conservant les propriétés de la triangulation.

## Description

La présente invention concerne le domaine de la modélisation numérique de formes, et plus particulièrement la modélisation de formes par la triangulation de Delaunay.

La modélisation de formes constitue un problème technique important. Elle est notamment utilisée pour l'affichage, pour le calcul par éléments finis, pour l'enregistrement de formes, pour l'usinage numérique, etc. Dans tous ces domaines, le but est de représenter par un ensemble de points une surface ou une forme, avec un nombre de points minimal, tout en assurant une fidélité de la représentation.

Une triangulation de Delaunay est constituée d'un ensemble de points ou sommets, qui sont reliés à leurs plus proches voisins par des arêtes. On appelle aussi triangulation de Delaunay le procédé permettant d'obtenir un tel ensemble de points.

La triangulation de Delaunay est un procédé largement utilisé dans la modélisation de formes; cette méthode présente notamment les avantages suivants:
- elle est itérative, et permet l'ajout d'un point dans la modélisation d'une forme sans changements dans la modélisation autres que locaux;
- elle est duale du diagramme de Voronoï, qui fournit une partition en termes de voisinages les plus proches.

Une des propriétés de la triangulation de Delaunay est qu'aucun point de la triangulation ne peut se trouver à l'intérieur du cercle circonscrit à tout triangle de la triangulation. Cette propriété est appelée critère du cercle vide. Dans une représentation en trois dimensions, ce critère devient un critère de la sphère vide, pour chaque tétraèdre de la triangulation.

Des détails supplémentaires sur la triangulation de Delaunay, et le diagramme de Voronoï sont fournis par exemple dans Computational Geometry : an introduction, Franco P. Preparata & Michael lan Shamos, Springer Verlag, 1985.

Il est intéressant, dans une modélisation d'une forme, de pouvoir intégrer à la modélisation des lignes de contraintes; ces lignes peuvent être de toute nature, en fonction de la forme qui est représentée; en cartographie, les lignes peuvent représenter des rivières, des crêtes ou des lignes de niveaux; dans une modélisation d'un visage, les lignes peuvent représenter les contours du visage, l'arête du nez; dans une modélisation d'un écoulement fluide, les lignes peuvent présenter les lignes d'écoulement du fluide. Tout comme la modélisation d'une forme, l'intégration de lignes de contraintes dans la modélisation constitue un problème technique.

Si la modélisation est réalisée par triangulation de Delaunay, il est intéressant que les lignes de contraintes soient constituées d'arêtes de la triangulation; ceci assure que les lignes de contrainte peuvent être manipulées comme le reste de la triangulation, et que l'on peut leur appliquer comme au reste de la triangulation les traitements habituels.

Or, lorsque l'on trace une ligne de contrainte dans une triangulation de Delaunay, rien n'assure que la ligne de contrainte soit effectivement constituée d'arêtes de la triangulation. Une solution à ce problème a déjà été proposée dans Rognant L., "Modélisation et risques naturels - reconstruction d'un modèle de terrain à partir d'un semis de points contraints et simulation d'un phénomène dynamique de descente appliqué aux risques naturels", DEA de Mathématiques appliquées, Université Joseph Fourier, TIMC/IMAG, Grenoble, 24 juin 1994. Ce document propose, pour intégrer une ligne de contrainte dans une triangulation de Delaunay, de commencer par effectuer une approximation polygonale de la ligne de contrainte; les différents sommets de l'approximation polygonale sont alors ajoutés à la triangulation de Delaunay. A l'issue de cette étape d'ajout, il n'est pas avéré que les segments constituant la ligne de contrainte soient effectivement constitués d'arêtes de la triangulation.

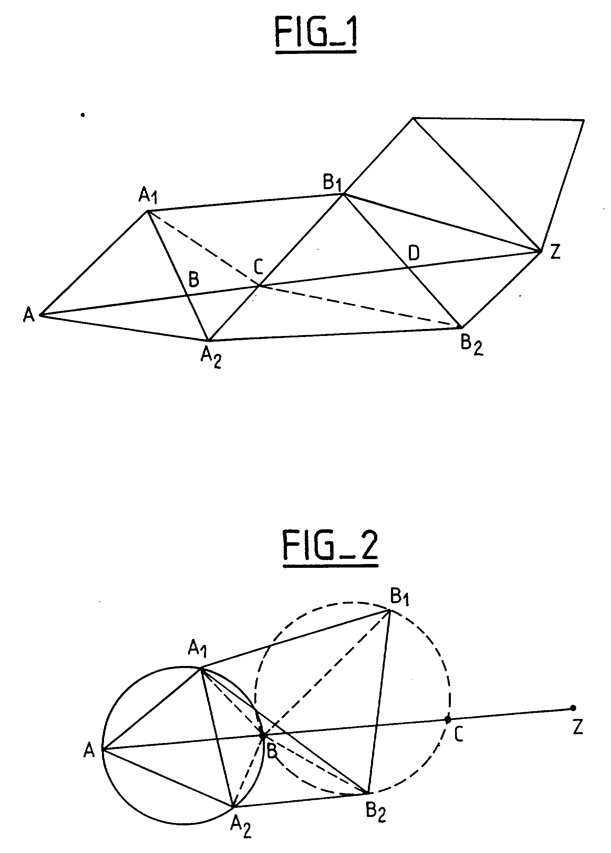

Si tel n'est pas le cas pour un segment [A, Z] donné, le document précité propose de considérer l'ensemble des points d'intersections d'arêtes de la triangulation avec le segment [A, Z]; ces points sont tous ajoutés dans la triangulation de Delaunay. L'ajout de tous les points d'intersection assure que le segment est formé d'arêtes de la triangulation de Delaunay. La figure 1 montre un exemple de triangulation selon ce procédé connu. On a porté à la figure les points A et Z formant le segment; dans la triangulation initiale, trois segments [A₁, A₂], [B₁, A₂] et [B₁, B₂] coupent le segment [A, Z]. Pour que le segment soit constitué d'arêtes de la triangulation de Delaunay, le mémoire de stage précité propose d'ajouter dans la triangulation les points B, C et D d'intersection respective de ces segments [A₁, A₂], [B₁, A₂] et [B₁, B₂] avec le segment [A, Z]. On a porté sur la figure 1 les arêtes ajoutées lors de l'ajout des différents points dans la triangulation. On montre qu'en notant N le nombre de triangles dans le tube de contraintes, l'ajout de N-1 points dans la triangulation permet d'intégrer le segment à la triangulation. On appelle tube de contraintes l'ensemble des triangles dans l'union desquels le segment est compris.

Cet ajout de l'ensemble des points d'intersection peut être réalisé pour chaque segment d'une ligne, de sorte à résoudre le problème.

Paul-Louis George et Houman Borouchaki, « Triangulation de Delaunay et maillage, applications aux éléments finis « , Hermès, proposent d'intégrer une contrainte dans une triangulation, en introduisant dans la triangulation l'ensemble des arêtes définies par les points d'intersection de la contrainte avec les arêtes de la triangulation. Ce document enseigne toutefois que cette méthode fournit une triangulation qui n'est pas une triangulation de Delaunay.

FR-A-2 740 888 propose un procédé de génération dynamique d'images synthétiques; dans ce document, il n'est pas question d'intégrer une ligne de contrainte dans une triangulation de Delaunay, mais simplement de sélectionner en temps réel les points à ajouter ou enlever dans la triangulation pour assurer une bonne visualisation. On considère à cet effet un critère qui est l'erreur angulaire entre les points remarquables et la triangulation, du point de vue de l'observateur.

EP-A-0 644 497 propose un procédé pour ajouter un point dans une modélisation par triangulation de Delaunay d'un semi-conducteur. Elle utilise le critère du cercle vide pour déterminer ceux des triangles proches du point à ajouter dont le cercle circonscrit contient le point à ajouter. Ces triangles sont ceux qui doivent être modifiés pour ajouter le point dans la triangulation. Ce document ne décrit pas l'intégration de lignes de contrainte dans le diagramme de Delaunay.

EP-A-0 644 496 décrit un procédé similaire, mais qui s'applique à un diagramme tridimensionnel; le critère du cercle vide est transformé en critère de la sphère vide, pour la sphère circonscrite à chaque tétraèdre. Comme le document précédent, il n'y a pas dans ce document d'incorporation de contraintes.

US-A-5 617 322 propose un procédé de modélisation de semi-conducteurs par triangulation de Delaunay. Ce document propose un procédé pour supprimer des points dans la triangulation, tout en conservant le caractère de triangulation de Delaunay. Le but est de diminuer la densité de points dans certaines zones de la triangulation.

DE-A-196 21 434 propose un procédé pour éliminer les intersections entre une frontière d'un objet et la triangulation de Delaunay de cet objet. Pour un triangle qui coupe la frontière, ce document propose de considérer la projection d'un sommet sur la frontière. Si la projection du sommet sur la frontière se trouve dans le cercle circonscrit d'un triangle autre que les triangles contenant le sommet, la projection du sommet est ajoutée dans la triangulation de Delaunay. En revanche, si la projection du sommet sur la frontière ne se trouve dans aucun cercle circonscrit à un triangle autre que les triangles contenant le sommet, le sommet est supprimé, et on construit à partir de la projection de nouveaux triangles, tout en conservant le caractère de Delaunay de la triangulation. Le procédé permet d'éliminer les intersections, tout en gardant une triangulation de Delaunay; il est appliqué à la modélisation des semi-conducteurs.

L'invention propose une nouvelle solution au problème de l'intégration de lignes de contrainte dans la modélisation d'une forme par triangulation de Delaunay; elle repose sur la constatation que la solution connue, si elle permet d'atteindre le résultat, est sous optimale; l'invention fournit une solution au problème de l'intégration dans une triangulation de Delaunay d'une ligne de contrainte, qui est plus rapide à mettre en oeuvre et implique d'ajouter moins de points que la solution connue. L'invention n'implique pas de pertes d'informations.

Plus précisément, l'invention propose un procédé d'intégration d'un segment d'une ligne de contrainte dans une modélisation d'une forme par une triangulation 2D satisfaisant le critère du cercle vide, comprenant les étapes de
- choix d'un point du segment faisant partie de la triangulation;
- détermination de l'arête la plus proche coupant le segment ;
- tracé du cercle circonscrit au triangle formé du dit point et de la dite arête ;
- ajout à la triangulation du point d'intersection entre le cercle circonscrit et le segment;
ces étapes étant répétées jusqu'à intégration de l'ensemble du segment dans la triangulation.

Avantageusement, l'étape de choix s'effectue, au départ par choix d'une extrémité du segment, puis pour une répétition ultérieure, en prenant le point ajouté lors de la répétition précédente.

L'invention propose encore un procédé d'intégration d'un segment d'une ligne de contrainte dans une modélisation d'une forme par une triangulation 2D satisfaisant le critère du cercle vide, comprenant les étapes de :
- pour les deux points de la triangulation délimitant la partie du segment ne faisant pas encore partie de la triangulation :
   * détermination de l'arête la plus proche coupant le segment ;
   * tracé du cercle circonscrit au triangle formé du dit point et de la dite arête ;
   * détermination de l'intersection entre le segment et le cercle circonscrit;
   * calcul de la distance (d₁, d₂) entre le dit point et la dite intersection ;
- l'ajout à la triangulation de l'intersection correspondant à la plus grande des deux distances ;
ces étapes étant répétées jusqu'à intégration de l'ensemble du segment dans la triangulation.

L'invention propose encore un procédé d'intégration d'un segment d'une ligne de contrainte dans une modélisation d'une forme par une triangulation 3D satisfaisant le critère de la sphère vide, comprenant les étapes de
- choix d'un point du segment faisant partie de la triangulation;
- détermination du triangle le plus proche coupant le segment ;
- tracé de la sphère circonscrite au tétraèdre formé du dit point et du dit triangle ;
- ajout à la triangulation du point d'intersection entre la sphère circonscrite et le segment;
ces étapes étant répétées jusqu'à intégration de l'ensemble du segment dans la triangulation.

L'étape de choix s'effectue de préférence, au départ par choix d'une extrémité du segment, puis pour une répétition ultérieure, en prenant le point ajouté lors de la répétition précédente.

L'invention propose enfin un procédé d'intégration d'un segment d'une ligne de contrainte dans une modélisation d'une forme par une triangulation 3D satisfaisant le critère de la sphère vide, comprenant les étapes de :
- pour les deux points de la triangulation délimitant la partie du segment ne faisant pas encore partie de la triangulation :
   * détermination du triangle le plus proche coupant le segment ;
   * tracé de la sphère circonscrite au triangle formé du dit point et du dit triangle ;
   * calcul de la distance (d₁, d₂) entre le dit point et la dite intersection ;
- ajout à la triangulation du point d'intersection correspondant à la plus grande des deux distances ;
ces étapes étant répétées jusqu'à intégration de l'ensemble du segment dans la triangulation.

Dans tous les modes de réalisation de l'invention, la triangulation peut être une triangulation de Delaunay, et la modélisation comprend avantageusement un ensemble de sommets sous forme numérique.

D'autres caractéristiques et avantages de l'invention apparaîtront à la lecture de la description qui suit de modes de réalisation de l'invention, donnée à titre d'exemple et en référence aux dessins annexés, qui montrent
- figure 1, une représentation schématique d'une triangulation dans laquelle est intégrée un segment, selon un procédé de l'art antérieur;
- figure 2, une représentation schématique d'une triangulation dans laquelle est intégrée un segment, selon le procédé de l'invention;
- figure 3 un ordinogramme d'un mode de réalisation de l'invention;
- figure 4, un ordinogramme d'un second mode de réalisation de l'invention.

L'invention propose un procédé pour intégrer une ligne de contrainte dans une modélisation de forme par triangulation de Delaunay. Elle repose sur la propriété de la triangulation de Delaunay du cercle vide, suivant laquelle aucun point de la triangulation ne peut se trouver à l'intérieur du cercle circonscrit à un triangle de la triangulation. L'invention propose d'utiliser cette propriété pour ajouter à la triangulation les points nécessaires pour que la ligne de contrainte soit effectivement constituée d'arêtes de la triangulation - autrement dit pour que la ligne de contrainte soit intégrée à la triangulation.

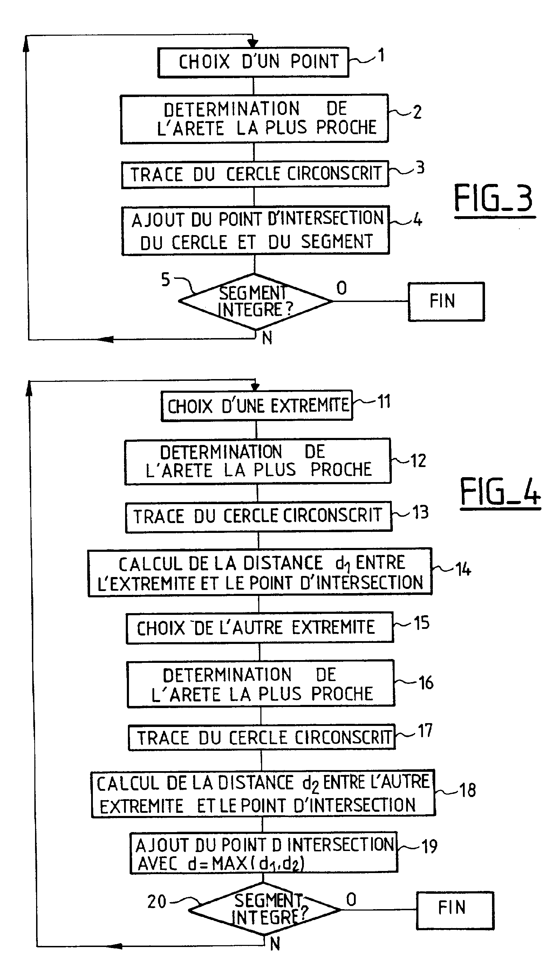

L'invention est expliquée en référence aux figures, dans l'exemple d'un segment. Comme expliqué plus haut, le problème d'intégration d'une ligne de contrainte dans une triangulation peut se ramener à l'intégration dans la triangulation d'un ensemble de segments. L'invention est décrite en référence à la figure 2, qui montre comme la figure 1 une triangulation, avec un segment [A, Z]. Selon l'invention, on procède à l'ajout des points de la façon suivante, qui est représentée dans l'ordinogramme de la figure 3.

La première étape 1 consiste à choisir une extrémité du segment qui est un sommet de la triangulation - dans l'exemple de la figure le point A. On détermine dans une seconde étape 2 la première arête de la triangulation qui coupe le segment [A, Z], autrement dit, le point d'intersection d'une arête de la triangulation avec le segment qui est le plus proche du point A. En supposant que l'on part des extrémités du segment, on n'a pas de problème de détermination de l'arête la plus proche.

Dans l'exemple de la figure, il s'agit de l'arête [A₁, A₂], ou du point B. Dans une troisième étape 3, on trace le cercle circonscrit au triangle {A, A₁, A₂}formé par le point du segment et par l'arête la plus proche. Ce cercle circonscrit coupe le segment, en un point B : en effet, s'il ne coupait pas le segment, alors le point Z serait dans le cercle circonscrit, et ceci serait contraire au critère du cercle vide; autrement dit, dans ce cas, l'arête [A, Z] ferait déjà partie de la triangulation.

On ajoute dans une quatrième étape 4 le point B à la triangulation de Delaunay. Ceci conduit à ajouter notamment dans la triangulation les arêtes [B, A₁], [B, A₂] et [A, B], [B, B₁] et [B, B₂]. On supprime par ailleurs dans la triangulation le segment [A₁, B₂].

Si l'on ajoute encore dans la triangulation le segment [B, Z] lors de l'ajout du sommet B dans la triangulation, alors le segment [A, Z] est constitué d'arêtes de la triangulation, et le but est atteint.

Si en revanche après l'ajout du sommet B, l'arête [B, Z] n'est pas une arête de la triangulation, alors, on recommence à partir de la première étape. Dans l'ordinogramme de la figure 3, ceci revient après la quatrième étape à tester dans l'étape 5 si l'ensemble du segment est intégré. Si c'est le cas, le traitement est terminé, et si tel n'est pas le cas, on passe de nouveau à la première étape 1.

Dans l'exemple de la figure 2, à l'étape 5, on détermine que le segment [B, Z] n'est pas un segment de la triangulation, et on repasse donc à l'étape 1. A l'étape 1, on choisit le point B, et on trace le cercle circonscrit au triangle formé du point B et de l'arête la plus proche coupant le segment [B, Z]. On trace alors lors de la troisième étape de la deuxième itération le cercle circonscrit au triangle {B, B₁, B₂}représenté en pointillés sur la figure, pour ajouter ensuite dans la triangulation le point C, à la quatrième étape de la deuxième itération.

L'invention permet ainsi par itération d'intégrer de nouveaux points du segment dans la triangulation, jusqu'à ce que le segment soit composé d'arêtes de la triangulation. Ce procédé est nécessairement fini, et le nombre d'itérations est au maximum égal au nombre de points d'intersections existant au départ entre le segment et des arêtes de la triangulation. De ce fait, le procédé de l'invention permet nécessairement d'arriver au résultat recherché.

Comme le montre la figure 2, le procédé de l'invention conduit à ajouter progressivement des points qui sont plus éloignés des points existants que dans le procédé de l'art antérieur représenté à la figure 1. L'invention permet ainsi de limiter le nombre de points ajoutés. En notant toujours N le nombre de triangles dans le tube de contraintes, on montre que le segment peut être intégrer à la triangulation par ajout dans celle-ci de N/2 points . L'invention permet un gain du nombre de points ajoutés, et une limitation correspondante de la taille des fichiers numériques représentant la forme.

Par rapport à la solution proposée dans le document DE-A-196 21 434, l'invention ne propose pas de supprimer des points de la triangulation de départ, et ne produit donc pas de perte d'information.

Dans le mode de réalisation décrit à la figure 1, on a commencé à tracer le cercle circonscrit au triangle {A, A₁, A₂}, puis on a jouté le point B et tracé le cercle circonscrit au triangle {B, B₁, B₂}. En d'autres termes, dans cet exemple, on progresse le long du segment [A, Z] toujours dans une même direction. Ce mode de réalisation dit anisotrope est particulièrement avantageux lorsque les segments d'une ligne de contrainte sont orientés; ce peut par exemple être le cas lorsque la ligne de contrainte représente un écoulement, tel qu'une rivière ou une ligne de plus grande pente sur une carte, ou encore une direction d'écoulement dans un fluide.

L'invention n'est pas limitée à ce mode de réalisation anisotrope. Dans un autre mode de réalisation, l'invention propose une progression isotrope sur le segment, en fonction de la distance de progression à chaque itération. La figure 4 montre un ordinogramme du procédé de tracé isotrope. Le mode de réalisation de la figure 4 diffère essentiellement de celui de la figure 3 dans le mode de choix du point de départ. Dans le mode de réalisation de la figure 3, le point de départ est choisi égal au point ajouté lors de l'itération précédente.

Dans le mode de réalisation de la figure 4, le point de départ est choisi comme le point qui permet d'intégrer dans la triangulation la partie la plus longue du segment. Dans une première étape 1 1, on choisit une extrémité du segment - qui par hypothèse est un sommet de la triangulation. On détermine dans une deuxième étape 12 l'arête la plus proche; dans une troisième étape 13, on trace le cercle circonscrit au triangle formé de l'extrémité et de l'arête la plus proche. On calcule dans une quatrième étape 14 la distance d₁ entre la dite extrémité et le point d'intersection du cercle circonscrit avec le segment.

Dans une cinquième étape 15, on considère l'autre extrémité du segment. - qui de nouveau est par hypothèse un sommet de la triangulation. On détermine dans une sixième étape 16 l'arête la plus proche; dans une septième étape 17, on trace le cercle circonscrit au triangle formé cette autre extrémité et de l'arête la plus proche. On calcule dans une huitième étape 18 la distance d₂ entre la dite autre extrémité et le point d'intersection du cercle circonscrit avec le segment.

On compare ensuite les distances d₁ et d₂ calculées aux quatrième et huitième étapes, et on ajoute dans une neuvième étape à la triangulation le point d'intersection entre le cercle circonscrit et le segment qui correspond à la distance la plus importante.

La dixième étape 20 est identique à la cinquième étape de la figure 3 : si le segment est complètement intégré à la triangulation, le traitement est terminé. A l'inverse, si le segment n'est pas complètement intégré, on repasse à la première étape, en considérant les nouvelles extrémités du segment.

Le mode de réalisation de la figure 4 assure à chaque étape la meilleure diminution de la taille du segment, autrement dit la plus grande progression. Par rapport au mode de réalisation de la figure 3, qui permet d'intégrer le segment par ajout de N/2 points, le mode de réalisation de la figure 4 permet d'intégrer le segment par ajout de moins de N/2 points.

Dans tous les cas, l'invention permet d'intégrer à une triangulation une ligne de contrainte, c'est-à-dire d'assurer que la ligne est formée d'arêtes de la triangulation. L'invention assure que la triangulation garde ses propriétés de triangulation de Delaunay; elle constitue aussi une méthode progressive, purement déterministe.

L'invention s'applique à la modélisation de toute forme, et à l'ajout de lignes de contraintes de nature quelconque. Elle s'applique en particulier à la cartographie. L'invention peut être mise en oeuvre par un programme d'ordinateur, en travaillant sur une triangulation représentée par une liste de sommets, par exemple une liste de sommets sous forme numérique.

On peut utiliser pour la mise en oeuvre de l'invention un programme d'ordinateur sous toutes les formes physiques possibles, avec des routines ou sous programmes pour exécuter les différentes étapes du procédé. Le programme peut être contenu dans une disquette, un disque compact, une mémoire vive ou morte, autrement dit dans tout produit contenant un programme d'ordinateur.

Bien entendu, la présente invention n'est pas limitée aux exemples et modes de réalisation décrits et représentés, mais elle est susceptible de nombreuses variantes accessibles à l'homme de l'art. Elle a été décrite dans le mode de réalisation préféré d'une triangulation de Delaunay; elle s'applique plus généralement à toute triangulation satisfaisant le critère du cercle vide, et qui permet l'ajout successif de points ou de sommets.

On peut bien aussi faire varier l'ordre des étapes 11 à 18 de la figure 4, tout en procédant toujours ensuite à une comparaison des deux distances; on peut de ce point de vue utiliser pour une des deux extrémités les résultats du calcul précédent, au moins si l'arête la plus proche n'a pas changé. On peut encore appliquer à un même segment les procédés des figures 3 ou 4 pour ajouter successivement des points, par exemple en commençant par le procédé de la figure 4 puis en appliquant celui de la figure 3, ou suivant un ordre différent.

L'invention a été décrite au cas d'une triangulation de Delaunay dans un plan. Elle s'applique tout aussi bien dans l'espace, les termes de triangle étant remplacés par tétraèdre, de cercle par sphère, d'arête par triangle, etc. On peut ainsi appliquer la méthode de l'invention dans une triangulation en deux ou trois dimensions. L'invention s'applique aussi à une représentation en 2,5 D, dans laquelle on associe à chaque sommet d'une triangulation plane une altitude. Dans ce cas, on peut intégrer la contrainte dans la triangulation plane, comme décrit en référence aux figures, et rajouter pour chaque nouveau sommet une altitude. Cette altitude peut être obtenue pour les nouveaux points du segment par interpolation linéaire sur le segment. On arrive ainsi à intégrer une ligne de contrainte dans une représentation en 2,5 D d'une forme.

## Revendications

1. Un procédé d'intégration d'un segment d'une ligne de contrainte dans une modélisation d'une forme par une triangulation satisfaisant le critère du cercle vide, comprenant les étapes de
- choix ( 1 ) d'un point du segment faisant partie de la triangulation;
- détermination (2) de l'arête la plus proche coupant le segment ;
- tracé (3) du cercle circonscrit au triangle formé du dit point et de la dite arête ;
- ajout (4) à la triangulation du point d'intersection entre le cercle circonscrit et le segment;
ces étapes étant répétées jusqu'à intégration de l'ensemble du segment dans la triangulation.

2. Le procédé selon la revendication 1, caractérisé en ce que la triangulation est une triangulation de Delaunay.

3. Le procédé selon la revendication 1 ou 2, caractérisé en ce que la modélisation comprend un ensemble de sommets sous forme numérique.

4. Le procédé selon la revendication 1, 2 ou 3, caractérisé en ce que l'étape de choix s'effectue, au départ par choix d'une extrémité du segment, puis pour une répétition ultérieure, en prenant le point ajouté lors de la répétition précédente.

5. Un procédé d'intégration d'un segment d'une ligne de contrainte dans une modélisation d'une forme par une triangulation satisfaisant le critère du cercle vide, comprenant les étapes de :
- pour les deux points de la triangulation délimitant la partie du segment ne faisant pas encore partie de la triangulation :
* détermination (12, 16) de l'arête la plus proche coupant le segment ;
* tracé (13, 17) du cercle circonscrit au triangle formé du dit point et de la dite arête ;
* détermination de l'intersection entre le segment et le cercle circonscrit;
* calcul (14, 18) de la distance (d₁, d₂) entre le dit point et la dite intersection ;
- l'ajout (19) à la triangulation de l'intersection correspondant à la plus grande des deux distances ;
ces étapes étant répétées jusqu'à intégration de l'ensemble du segment dans la triangulation.

6. Le procédé selon la revendication 5, caractérisé en ce que la triangulation est une triangulation de Delaunay.

7. Le procédé selon la revendication 5 ou 6, caractérisé en ce que la modélisation comprend un ensemble de sommets sous forme numérique.

8. Un procédé d'intégration d'un segment d'une ligne de contrainte dans une modélisation d'une forme par une triangulation satisfaisant le critère de la sphère vide, comprenant les étapes de
- choix (1) d'un point du segment faisant partie de la triangulation;
- détermination (2) du triangle le plus proche coupant le segment ;
- tracé (3) de la sphère circonscrite au tétraèdre formé du dit point et du dit triangle ;
- ajout (4) à la triangulation du point d'intersection entre la sphère circonscrite et le segment;
ces étapes étant répétées jusqu'à intégration de l'ensemble du segment dans la triangulation.

9. Le procédé selon la revendication 8, caractérisé en ce que la triangulation est une triangulation de Delaunay.

10. Le procédé selon la revendication 8 ou 9, caractérisé en ce que la modélisation comprend un ensemble de sommets sous forme numérique.

11. Le procédé selon la revendication 8, 9 ou 10, caractérisé en ce que l'étape de choix s'effectue, au départ par choix d'une extrémité du segment, puis pour une répétition ultérieure, en prenant le point ajouté lors de la répétition précédente.

12. Un procédé d'intégration d'un segment d'une ligne de contrainte dans une modélisation d'une forme par une triangulation satisfaisant le critère de la sphère vide, comprenant pour les deux points de la triangulation délimitant la partie du segment ne faisant pas encore partie de la triangulation les étapes de
- détermination (12, 16) du triangle le plus proche coupant le segment ;
- tracé (13, 17) de la sphère circonscrite au triangle formé du dit point et du dit triangle ;
- calcul (14, 18) de la distance (d₁, d₂) entre le dit point et la dite intersection ;
puis par ajout (19) à la triangulation du point d'intersection correspondant à la plus grande des deux distances ;
ces étapes étant répétées jusqu'à intégration de l'ensemble du segment dans la triangulation.

13. Le procédé selon la revendication 12, caractérisé en ce que la triangulation est une triangulation de Delaunay.

14. Le procédé selon la revendication 12 ou 13, caractérisé en ce que la modélisation comprend un ensemble de sommets sous forme numérique.
